# EUROPEAN PATENT APPLICATION

(11) **EP 4 561 139 A1**
(43) Date of publication of application: **28.05.2025**
(21) Application number: 23842063.2
(22) Date of filing: 29.06.2023
(51) Int. Cl.: H04W 12/50

(54) **PAIRING METHOD BASED ON TWO-WAY COMMUNICATION, AND VIDEO-AUDIO ENTERTAINMENT SYSTEM**

(30) Priority: 22.07.2022 CN 202210871594
(71) Applicant: BYD Company Limited, Shenzhen, Guangdong 518118 (CN)
(72) Inventor: LI, Faxi, Shenzhen, Guangdong 518118 (CN); YANG, Dongsheng, Shenzhen, Guangdong 518118 (CN); LIU, Juan, Shenzhen, Guangdong 518118 (CN); WU, Lihua, Shenzhen, Guangdong 518118 (CN)
(74) Representative: Mathys & Squire
(86) International application number: PCT/CN2023/104133
(87) International publication number: WO 2024/016998

(57) **Abstract**

A pairing method based on two-way communication, which method is applied to a receiver, a microphone, a video-audio entertainment system and a vehicle. The method comprises: determining a target frequency point, wherein the target frequency point is the frequency point with the least interference within a preset range of a receiver or a preset frequency point which is stored in the receiver; sending frequency point information of the target frequency point to a microphone; receiving pairing information of the target frequency point, wherein the pairing information comprises identity information of the microphone; according to the pairing information, determining whether the identity information matches preset identity information which is stored in the receiver; and in response to the identity information matching the preset identity information, switching a working frequency point of the receiver to the target frequency point, so as to perform a pairing connection with the microphone.

## Description

### CROSS-REFERENCE TO RELATED APPLICATIONS

The present disclosure claims priority to Chinese Patent Application 202210871594.8, filed on July 22, 2022 and entitled "PAIRING METHOD BASED ON TWO-WAY COMMUNICATION, RECEIVER, MICROPHONE, AND ENTERTAINMENT SYSTEM". The entire content of the above-referenced application is incorporated herein by reference.

### FIELD

The present disclosure relates to the technical field of electronic devices, and more specifically, to a pairing method based on two-way communication, a receiver, a microphone, a video-audio entertainment system, and a vehicle.

### BACKGROUND

With continuous development of automotive technologies, requirements of users for on-board terminal applications are no longer limited to functions such as transportation, music playback, and navigation. To enhance core competitiveness of the automotive industry and improve entertainment, educational, and practical functionalities of on-board terminals, it has become a trend in current development of the automotive industry to develop a karaoke system and realize in-car karaoke. The karaoke system generally includes a microphone and a receiver, and the microphone and the receiver need to be paired and then the karaoke system can be used normally.

In the related art, first pairing of the microphone and the receiver requires the user to pair frequency points by triggering a microphone button or perform pairing through Bluetooth, which belongs to one-way inductive pairing. The user needs to perform multi-step operations to achieve a successful pairing, and the operations are relatively complicated and cumbersome, which causes inconvenience in the user's usage.

### SUMMARY

To at least partially resolve the above problem existing in the related art, an objective of embodiments of the present disclosure is to provide a pairing method based on two-way communication and a video-audio entertainment system.

To achieve the above objective, a first aspect of the embodiments of the present disclosure provides a pairing method based on two-way communication, applied to a receiver. The pairing method includes the following steps.

A target frequency point is determined. The target frequency point is a frequency point with least interference within a preset range of the receiver or a preset frequency point stored in the receiver.

Frequency point information of the target frequency point is sent to a microphone.

Pairing information is received. The pairing information includes identity information of the microphone.

It is determined according to the pairing information whether the identity information matches preset identity information stored in the receiver.

In response to the identity information matching the preset identity information, a working frequency point of the receiver is switched to the target frequency point, to perform a pairing connection with the microphone.

In this embodiment of the present disclosure, before the target frequency point is determined, the pairing method further includes the following step.

The working frequency point of the receiver is switched to a common frequency point.

In this embodiment of the present disclosure, that a target frequency point is determined includes the following step.

The receiver is controlled to be in a pairing mode. The target frequency point is determined in a polling manner.

In this embodiment of the present disclosure, the pairing method further includes the following step.

Communication with the microphone is performed according to the target frequency point when the receiver is in a working mode.

In this embodiment of the present disclosure, the pairing method further includes the following step.

After successful pairing with the microphone, pairing success information is sent to the microphone.

A second aspect of the embodiments of the present disclosure provides a pairing method based on two-way communication, applied to a microphone. The pairing method includes the following steps.

Frequency point information of a target frequency point is received. The frequency point information of the target frequency point is sent by a receiver. The target frequency point is a frequency point with least interference within a preset range of the receiver or a preset frequency point stored in the receiver.

A working frequency point of the microphone is switched to the target frequency point.

Pairing information is sent based on the target frequency point, to cause the receiver to determine, according to the pairing information, whether to perform a pairing connection with the microphone. The pairing information includes identity information of the microphone.

In this embodiment of the present disclosure, before the frequency point information of the target frequency point is received, the pairing method further includes the following step.

The working frequency point of the microphone is switched to a common frequency point.

In this embodiment of the present disclosure, the pairing method further includes the following step.

After successful pairing with the receiver, pairing success information sent by the receiver is received.

A third aspect of the embodiments of the present disclosure provides a video-audio entertainment system. The video-audio entertainment system includes:
a processor, a communication interface, a memory, and a communication bus. The processor, the communication interface, and the memory communicate with each other through the communication bus.

The memory is configured to store a computer program. The processor is configured to, when executing the computer program stored in the memory, implement steps of the above pairing method.

Through the above technical solutions, that is, the target frequency point is determined through the receiver, the target frequency point is the frequency point with the least interference within the preset range of the receiver or the preset frequency point stored in the receiver. The receiver sends the frequency point information of the target frequency point to the microphone. After the microphone receives the frequency point information of the target frequency point, the working frequency point of the microphone is switched to the target frequency point. The microphone sends the pairing information based on the target frequency point. The pairing information includes the identity information of the microphone. After the receiver receives the pairing information, it is determined according to the pairing information whether the identity information matches the preset identity information stored in the receiver. In response to the identity information matching the preset identity information, the working frequency point of the receiver is switched to the target frequency point, to perform the pairing connection with the microphone. In such a manner, the pairing process can be automatically completed by the microphone and the receiver, thereby realizing non-inductive pairing of the microphone and the receiver. The operation is simple and reliable, thereby improving usage experience of a user.

Other features and advantages of the embodiments of the present disclosure are to be described in detail in the following detailed description.

### BRIEF DESCRIPTION OF THE DRAWINGS

The accompanying drawings are intended to provide further understanding of embodiments of the present disclosure and constitute a part of this specification. The accompanying drawings and the specific implementations below are used together for explaining the embodiments of the present disclosure rather than constituting a limitation on the embodiments of the present disclosure. In the drawings:
FIG. 1 is a schematic flowchart of a pairing method based on two-way communication according to an embodiment of the present disclosure;
FIG. 2 is another schematic flowchart of a pairing method based on two-way communication according to an embodiment of the present disclosure;
FIG. 3 is a schematic structural diagram of a receiver according to an embodiment of the present disclosure;
FIG. 4 is a schematic structural diagram of a microphone according to an embodiment of the present disclosure; and
FIG. 5 is an internal structure diagram of a computer device according to an embodiment of the present disclosure.

### DETAILED DESCRIPTION

To make the objectives, technical solutions, and advantages of the embodiments of the present disclosure clearer, the technical solutions in the embodiments of the present disclosure are to be clearly and completely described with reference to the accompanying drawings in the embodiments of the present disclosure. It should be understood that the specific implementations described herein are merely used for describing and explaining the embodiments of the present disclosure, and are not intended to limit the embodiments of the present disclosure. All other embodiments obtained by a person of ordinary skill in the art based on the embodiments of the present disclosure without creative efforts shall fall within the protection scope of the present disclosure.

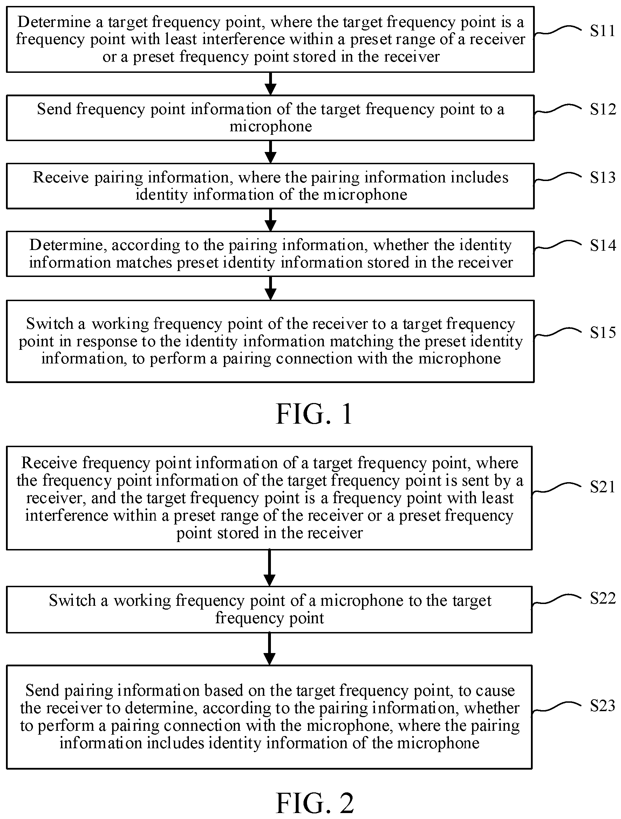

FIG. 1 is a schematic flowchart of a pairing method based on two-way communication according to an embodiment of the present disclosure. As shown in FIG. 1, in an embodiment of the present disclosure, a pairing method based on two-way communication is provided, applied to a receiver. The pairing method includes the following steps.

Step S11: A target frequency point is determined. The target frequency point is a frequency point with least interference within a preset range of the receiver or a preset frequency point stored in the receiver.

Step S12: Frequency point information of the target frequency point is sent to a microphone.

Step S13: Pairing information is received. The pairing information includes identity information of the microphone.

Step S14: It is determined according to the pairing information whether the identity information matches preset identity information stored in the receiver.

Step S15: In response to the identity information matching the preset identity information, a working frequency point of the receiver is switched to the target frequency point, to perform a pairing connection with the microphone.

It may be understood that the method in this embodiment is performed by the receiver. Specifically, in step S11, the receiver may poll a working frequency band and find the frequency point with the least interference within the preset range as the target frequency point. If the target frequency point is not found, continuous searching is performed until the target frequency point is found. The receiver may further determine the stored preset frequency point as the target frequency point. The preset frequency point may be a frequency point pre-written in the receiver by a user according to an actual situation.

In step S12, after determining the target frequency point, the receiver may send the frequency point information of the target frequency point to the microphone in a form of broadcasting. The frequency point information is used for representing a frequency value of the target frequency point. In step S13, after the receiver sends the frequency point information of the target frequency point in the form of broadcasting, the microphone within a communication range may receive the frequency point information of the target frequency point. The microphone that needs to be paired may switch the working frequency point thereof to the target frequency point and initiate a pairing request, so that the receiver may receive the pairing information sent by the microphone based on the target frequency point. The identity information of the microphone may be chip_ID of the microphone.

In step S14, the receiver pre-stores the identity information of the microphone that needs to be paired, that is, the preset identity information. After receiving the pairing information sent by the microphone by using the target frequency point, the pairing information may be parsed to obtain the identity information of the microphone, and the parsed identity information of the microphone is matched with the stored preset identity information. In step S15, when the parsed identity information of the microphone matches the stored preset identity information, the receiver may switch the working frequency point thereof to the target frequency point, to complete the pairing connection with the microphone.

In the above manner, the user only needs to turn on power buttons of the microphone and the receiver when completing a first pairing of the microphone and the receiver. The pairing process can be automatically completed by the microphone and the receiver, thereby realizing non-inductive pairing of the microphone and the receiver. The operation is simple and reliable, thereby improving usage experience of the user.

In an embodiment, before the target frequency point is determined in step S11, the pairing method may further include the following step. The working frequency point of the receiver is switched to a common frequency point.

Specifically, the receiver generally communicates wirelessly with the microphone through an Ultra High frequency (UHF). A common frequency point thereof may for example range from 650 MHz to 698 MHz. When the user turns on the power button of the receiver, the receiver first switches the working frequency point thereof to the common frequency point after being powered on. It may be understood that, after the target frequency point is determined, the receiver sends the frequency point information of the target frequency point to the outside in the form of broadcasting by using the common frequency point, so that a microphone within the communication range may receive the frequency point information of the target frequency point by using the same common frequency point.

In an embodiment, that a target frequency point is determined in step S11 may include the following step. The receiver is controlled to be in a pairing mode. The target frequency point is determined in a polling manner.

It may be understood that the receiver and the microphone need to be paired only during a first connection for use. In other words, when the receiver is in the pairing mode, the steps of determining the target frequency point and performing the pairing connection need to be performed. Specifically, when the receiver and the microphone are first connected for use, the user turns on the power button of the receiver, to control the receiver to be in the pairing mode. The receiver finds the frequency point with the least interference within the preset range as the target frequency point by polling a working band, or determines the stored preset frequency point as the target frequency point.

In an embodiment, the pairing method may further include the following step. Communication with the microphone is performed according to the target frequency point when the receiver is in a working mode.

Specifically, after the receiver and the microphone are successfully paired for the first time, during subsequent connection for use, that is, when the receiver is in a working mode, the receiver may directly communicate with the microphone by using the target frequency point, without needing to repeatedly perform the steps of determining the target frequency point and performing the pairing connection. For example, in the subsequent connection for use, the microphone collects voice of the user to obtain an audio signal, processes the audio signal, and then sends processed data to the receiver by using the target frequency point. The receiver may receive the data by using the target frequency point, extract the audio signal from the received data, and then play the audio signal through a speaker.

In an embodiment, the pairing method may further include the following step. After successful pairing with the microphone, pairing success information is sent to the microphone.

Specifically, in a case that it is determined that the identity information matches the preset identity information, the receiver switches the working frequency point thereof to the target frequency point, that is, the receiver and the microphone are paired successfully. The receiver may send the pairing success information to the microphone by using the target frequency point. After the microphone receives the pairing success information, the microphone determines that non-inductive pairing between the microphone and the receiver is complete.

Through the above technical solutions, that is, the target frequency point is determined through the receiver, the target frequency point is the frequency point with the least interference within the preset range of the receiver or the preset frequency point stored in the receiver. The receiver sends the frequency point information of the target frequency point to the microphone. After the microphone receives the frequency point information of the target frequency point, the working frequency point of the microphone is switched to the target frequency point. The microphone sends the pairing information based on the target frequency point. The pairing information includes the identity information of the microphone. After the receiver receives the pairing information, it is determined according to the pairing information whether the identity information matches the preset identity information stored in the receiver. In response to the identity information matching the preset identity information, the working frequency point of the receiver is switched to the target frequency point, to perform the pairing connection with the microphone. In such a manner, the pairing process can be automatically completed by the microphone and the receiver, thereby realizing non-inductive pairing of the microphone and the receiver. The operation is simple and reliable, thereby improving usage experience of a user.

Referring to FIG. 2, FIG. 2 is another schematic flowchart of a pairing method based on two-way communication according to an embodiment of the present disclosure. As shown in FIG. 2, in an embodiment of the present disclosure, a pairing method based on two-way communication is provided, applied to a microphone. The method includes the following steps.

Step S21: Frequency point information of a target frequency point is received. The frequency point information of the target frequency point is sent by a receiver. The target frequency point is a frequency point with least interference within a preset range of the receiver or a preset frequency point stored in the receiver.

Step S22: A working frequency point of the microphone is switched to the target frequency point.

Step S23: Pairing information is sent based on the target frequency point, to cause the receiver to determine, according to the pairing information, whether to perform a pairing connection with the microphone. The pairing information includes identity information of the microphone.

It may be understood that the method in this embodiment is performed by the microphone. Specifically, the microphone that needs to be paired may attempt to receive the frequency point information of the target frequency point sent by the receiver within a communication range. When the frequency point information of the target frequency point is not received, the microphone continuously attempts to perform receiving until the frequency point information of the target frequency point is received. Then the microphone may switch the working frequency point thereof to the target frequency point, and send pairing information to the receiver by using the target frequency point. The pairing information includes the identity information of the microphone, for example, may be chip_ID of the microphone, so that the receiver may parse the pairing information after receiving the pairing information, to obtain the identity information of the microphone, and match the parsed identity information of the microphone with the preset identity information stored in the receiver. When the parsed identity information of the microphone matches the stored preset identity information, the receiver may switch the working frequency point thereof to the target frequency point. In other words, the microphone and the receiver use the same working frequency point, and the microphone and the receiver are paired successfully.

In an embodiment, before the frequency point information of the target frequency point sent by the receiver is received in step S21, the pairing method may further include the following step. The working frequency point of the microphone is switched to a common frequency point.

Specifically, a user turns on a power button of the microphone, and the microphone first switches the working frequency point thereof to the common frequency point after being powered on. It may be understood that, the microphone that needs to be paired and the receiver have the same common frequency point. After the receiver sends the frequency point information of the target frequency point in a form of broadcasting by using the common frequency point, the microphone within the communication range may receive the frequency point information of the target frequency point by using the same common frequency point.

In an embodiment, the pairing method may further include the following step. After successful pairing with the receiver, pairing success information sent by the receiver is received.

Specifically, after the microphone is successfully paired with the receiver, the receiver may use the target frequency point to send the pairing success information to the microphone. After the microphone receives the pairing success information, the microphone determines that non-inductive pairing between the microphone and the receiver is complete.

Through the above technical solutions, that is, the target frequency point is determined through the receiver, the target frequency point is the frequency point with the least interference within the preset range of the receiver or the preset frequency point stored in the receiver. The receiver sends the frequency point information of the target frequency point to the microphone. After the microphone receives the frequency point information of the target frequency point, the working frequency point of the microphone is switched to the target frequency point. The microphone sends the pairing information based on the target frequency point. The pairing information includes the identity information of the microphone. After the receiver receives the pairing information, it is determined according to the pairing information whether the identity information matches the preset identity information stored in the receiver. In response to the identity information matching the preset identity information, the working frequency point of the receiver is switched to the target frequency point, to perform the pairing connection with the microphone. In such a manner, the pairing process can be automatically completed by the microphone and the receiver, thereby realizing non-inductive pairing of the microphone and the receiver. The operation is simple and reliable, thereby improving usage experience of a user.

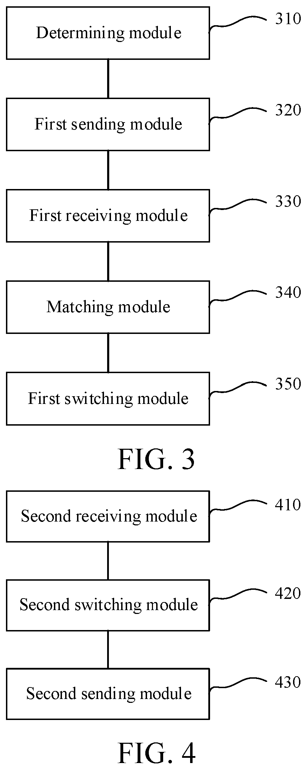

Referring to FIG. 3, FIG. 3 is a schematic structural diagram of a receiver according to an embodiment of the present disclosure. As shown in FIG. 3, in an embodiment of the present disclosure, a receiver is provided. The receiver includes a determining module 310, a first sending module 320, a first receiving module 330, a matching module 340, and a first switching module 350.

The determining module 310 is configured to determine a target frequency point. The target frequency point is a frequency point with least interference within a preset range of the receiver or a preset frequency point stored in the receiver.

The first sending module 320 is configured to send frequency point information of the target frequency point to a microphone.

The first receiving module 330 is configured to receive pairing information. The pairing information includes identity information of the microphone.

The matching module 340 is configured to determine, according to the pairing information, whether the identity information matches preset identity information stored in the receiver.

The first switching module 350 is configured to switch a working frequency point of the receiver to a target frequency point in response to the identity information matching the preset identity information, to perform a pairing connection with the microphone.

Specifically, the receiver generally communicates wirelessly with the microphone through a UHF. A Radio Frequency (RF) chip may be integrated inside the receiver. The first sending module 320 may include a sending TX (transport) chip. The first receiving module 330 may include multiple receiving RX (receive) chips.

In an embodiment, before the determining module 310 determines the target frequency point, the first switching module 350 is further configured to switch the working frequency point of the receiver to a common frequency point.

In an embodiment, that the determining module 310 determines a target frequency point includes the following step. The receiver is controlled to be in a pairing mode. The target frequency point is determined in a polling manner.

In an embodiment, the determining module 310 is further configured to communicate with the microphone according to the target frequency point when the receiver is in a working mode.

In an embodiment, the first sending module 320 is further configured to send, after pairing with the microphone is successful, pairing success information to the microphone.

It should be noted that, when the receiver provided in the above embodiment performs a relevant operation, only division of the above program modules is used as an example for description. In actual application, the above processing allocation may be completed by different program modules as required. In other words, an internal structure of the receiver is divided into different program modules, to complete all or part of the processing described above. In addition, the receiver provided in the above embodiment belongs to the same idea as the method embodiment applied to the receiver in the above embodiment. For a specific implementation process thereof, refer to the method embodiment. The details are not described herein again.

Referring to FIG. 4, FIG. 4 is a schematic structural diagram of a microphone according to an embodiment of the present disclosure. As shown in FIG. 4, in an embodiment of the present disclosure, a microphone is provided. The microphone includes a second receiving module 410, a second switching module 420, and a second sending module 430.

The second receiving module 410 is configured to receive frequency point information of a target frequency point. The frequency point information of the target frequency point is sent by a receiver. The target frequency point is a frequency point with least interference within a preset range of the receiver or a preset frequency point stored in the receiver.

The second switching module 420 is configured to switch a working frequency point of the microphone to the target frequency point.

The second sending module 430 is configured to send pairing information based on the target frequency point, to cause the receiver to determine, according to the pairing information, whether to perform a pairing connection with the microphone. The pairing information includes identity information of the microphone.

Specifically, the receiver generally communicates wirelessly with the microphone through a UHF. An RF chip may be integrated inside the microphone. The second receiving module 410 may include a receiving RX chip. The second sending module 430 may include a sending TX chip.

In an embodiment, before the second receiving module 410 receives the frequency point information of the target frequency point, the second switching module 420 is further configured to switch the working frequency point of the microphone to a common frequency point.

In an embodiment, the second receiving module 410 is further configured to receive, after pairing with the receiver is successful, pairing success information sent by the receiver.

It should be noted that, when the microphone provided in the above embodiment performs a relevant operation, only division of the above program modules is used as an example for description. In actual application, the above processing allocation may be completed by different program modules as required. In other words, an internal structure of the microphone is divided into different program modules, to complete all or part of the processing described above. In addition, the microphone provided in the above embodiment belongs to the same idea as the method embodiment applied to the microphone in the above embodiment. For a specific implementation process thereof, refer to the method embodiment. The details are not described herein again.

An embodiment of the present disclosure further provides a video-audio entertainment system. The video-audio entertainment system includes the above receiver and the above microphone.

In an embodiment, the video-audio entertainment system further includes a multimedia host, an external power amplifier, and a speaker.

Specifically, the receiver communicates wirelessly with the microphone through a UHF. The receiver is connected to a hardware interface of the multimedia host in a wired manner. The multimedia host is connected to the external power amplifier through an automotive audio bus (A2B).

An embodiment of the present disclosure further provides a vehicle. The vehicle includes the above video-audio entertainment system.

An embodiment of the present disclosure further provides a machine-readable storage medium. The machine-readable storage medium stores an instruction. The instruction, when executed by a processor, causes the processor to be configured to perform the above pairing method based on two-way communication.

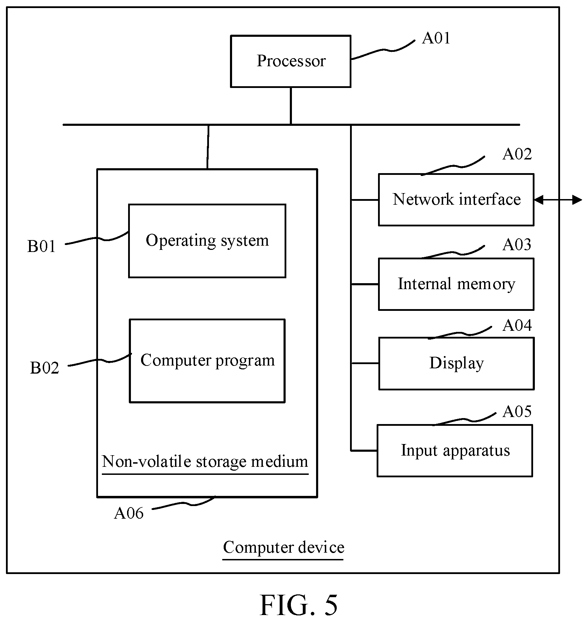

In an embodiment, a computer device is provided. The computer device may be a terminal, and an internal structure diagram of the computer device may be shown in FIG. 5. The computer device includes a processor A01, a network interface A02, a display A04, an input apparatus A05, and a memory (not shown in the figure) that are connected through a system bus. The processor A01 of the computer device is configured to provide computing and control capabilities. The memory of the computer device includes an internal memory A03 and a non-volatile storage medium A06. The non-volatile storage medium A06 stores an operating system B01 and a computer program B02. The internal memory A03 provides an environment for running of the operating system B01 and the computer program B02 in the non-volatile storage medium A06. The network interface A02 of the computer device is configured to connect to and communicate with an external terminal through a network. The computer program, when executed by the processor A01, implements the pairing method based on two-way communication provided in any of the above embodiments. The display A04 of the computer device may be a liquid crystal display or an electronic ink display. The input apparatus A05 of the computer device may be a touch layer covering the display, or may be a button, a trackball, or a touchpad arranged on a housing of the computer device, and may be further an external keyboard, a touchpad, a mouse, or the like.

A person skilled in the art may understand that the structure shown in FIG. 5 is merely a block diagram of a partial structure related to the solution of the present disclosure, and does not constitute a limitation on the computer device to which the solution of the present disclosure is applied. Specifically, the computer device may include more or fewer components than those shown in the figure, or some merged components, or different component arrangements.

The present disclosure further provides a computer program product. The computer program product, when being executed on a data processing device, is adapted to perform the above pairing method based on two-way communication.

A person skilled in the art should understand that the embodiments of the present disclosure may be provided as a method, a system, or a computer program product. Therefore, the present disclosure may be implemented in the form of a fully hardware-based embodiment, a fully software-based embodiment, or an embodiment combining both software and hardware aspects. Moreover, the present disclosure may be in the form of a computer program product implemented on one or more computer-usable storage media (including but not limited to a disk memory, a compact Disc-Read Only Memory (CD-ROM), and an optical memory) including computer-usable program code.

The present disclosure is described with reference to the flowcharts and/or block diagrams of the method, the device (system), and the computer program product according to embodiments of the present disclosure. It should be understood that each process and/or block in the flowcharts and/or the block diagrams and a combination of the process and/or the block in the flowcharts and/or the block diagrams may be implemented through computer program instructions. The computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing functions specified in one or more processes in the flowcharts and/or in one or more blocks in the block diagrams.

The computer program instructions may also be stored in a computer-readable memory that can direct the computer or another programmable data processing device to operate in a specific manner, so that the instructions stored in the computer-readable memory generate a product that includes an instruction apparatus. The instruction apparatus implements functions specified in one or more processes in the flowcharts and/or in one or more blocks in the block diagrams.

The computer program instructions may also be loaded onto a computer or another programmable data processing device, so that a series of operations and steps are performed on the computer or another programmable device to generate a computer-implemented process. Therefore, the instructions executed on the computer or another programmable device provide steps for implementing functions specified in one or more processes in the flowcharts and/or in one or more blocks in the block diagrams.

In a typical configuration, a computing device includes one or more processors (CPUs), an input/output interface, a network interface, and a memory.

The processor may be an integrated circuit chip and has a signal processing capability. During implementation, each step of the above method may be completed through an integrated logic circuit of hardware in the processor or an instruction in a form of software. The above processor may be a general-purpose processor, a Digital Signal Processor (DSP), or another programmable logic device, a discrete gate or transistor logic device, or a discrete hardware component, or the like. The processor may implement or execute the methods, the steps, and the logic block diagrams disclosed in the embodiments of the present disclosure. The general-purpose processor may be a microprocessor, any conventional processor, or the like. The steps of the method disclosed with reference to the embodiments of the present disclosure may be directly performed and completed by a hardware decoding processor, or may be performed and completed through a combination of hardware and software modules in the decoding processor. The software module may be located in a storage medium. The storage medium is located in a memory. The processor reads information in the memory and completes the steps of the above method in combination with hardware thereof.

It may be understood that the memory of the embodiments of the present disclosure may be a volatile memory or a non-volatile memory, or may include both a volatile memory and a non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disc, or a CD-ROM. The magnetic surface memory may be a magnetic disk memory or a magnetic tape memory. The volatile memory may be a RAM, which serves as an external cache. Through examples rather than limitations, many forms of RAMs are available, for example, a Static RAM (SRAM), a Synchronous Static RAM (SSRAM), a Dynamic RAM (DRAM), a Synchronous DRAM (SDRAM), a Double Data Rate SDRAM (DDRSDRAM), an Enhanced SDRAM (ESDRAM), a SyncLink DRAM (SLDRAM), and a Direct Rambus RAM (DRRAM). The memory described in the embodiments of the present disclosure is intended to include, but not limited to, these and any other suitable types of memories.

The computer-readable medium includes both permanent and non-permanent, removable and non-removable media. Information storage may be implemented by using any method or technology. The information may be computer-readable instructions, a data structure, a module of a program, or other data. Examples of a computer storage medium include but are not limited to a Phase Change Memory (PRAM), a SRAM, a DRAM, another type of RAM, a ROM, an EEPROM, a flash memory or another memory technology, a CD-ROM, a Digital Video Disk (DVD) or another optical storage, a magnetic cassette tape, a magnetic disk memory or another magnetic storage device, or any other non-transmission medium, which may be configured to store information accessible by a computing device. As defined herein, the computer-readable medium does not include a transitory computer-readable medium, such as a modulated data signal and a carrier.

It should be further noted that, the term "comprise", "include", or any other variant is intended to encompass non-exclusive inclusion, such that a process, a method, a commodity, or a device including a series of elements not only includes those elements, but also includes other elements not listed explicitly, or includes intrinsic elements of the process, the method, the commodity, or the device. Without more limitations, an element limited by a statement "include a/an ..." does not exclude additional same elements existing in the process, the method, the commodity, or the device including the elements.

The above descriptions are merely the embodiments of the present disclosure and are not intended to limit the protection scope of the present disclosure. For a person skilled in the art, the present disclosure may have various modifications and changes. Any modification, equivalent replacement, and improvement made within the spirit and principle of the present disclosure shall fall within the scope of claims of the present disclosure.

## Claims

1. A pairing method based on two-way communication, applied to a receiver, the pairing method comprising:
determining a target frequency point, wherein the target frequency point is a frequency point with least interference within a preset range of the receiver or a preset frequency point stored in the receiver;
sending frequency point information of the target frequency point to a microphone;
receiving pairing information, wherein the pairing information comprises identity information of the microphone;
determining, according to the pairing information, whether the identity information matches preset identity information stored in the receiver; and
switching a working frequency point of the receiver to the target frequency point in response to the identity information matching the preset identity information, to perform a pairing connection with the microphone.

2. The pairing method according to claim 1, before determining the target frequency point, the pairing method further comprising:
switching the working frequency point of the receiver to a common frequency point.

3. The pairing method according to claim 1 or 2, wherein determining the target frequency point comprises:
controlling the receiver to be in a pairing mode, and determining the target frequency point in a polling manner.

4. The pairing method according to any of claims 1 to 3, further comprising:
performing communication with the microphone according to the target frequency point in response to the receiver being in a working mode.

5. The pairing method according to any of claims 1 to 4, further comprising:
sending, after successful pairing with the microphone, successful pairing information to the microphone.

6. A pairing method based on two-way communication, applied to a microphone, the pairing method comprising:
receiving frequency point information of a target frequency point, wherein the frequency point information of the target frequency point is sent by a receiver, the target frequency point being a frequency point with least interference within a preset range of the receiver or a preset frequency point stored in the receiver;
switching a working frequency point of the microphone to the target frequency point; and
sending pairing information based on the target frequency point, to cause the receiver to determine, according to the pairing information, whether to perform a pairing connection with the microphone, wherein the pairing information comprises identity information of the microphone.

7. The pairing method according to claim 6, before the receiving frequency point information of a target frequency point, the pairing method further comprising:
switching the working frequency point of the microphone to a common frequency point.

8. The pairing method according to claim 6 or 7, further comprising:
receiving, after successful pairing with the receiver, pairing success information sent by the receiver.

9. A video-audio entertainment system, comprising:
a processor, a communication interface, a memory, and a communication bus, wherein the processor, the communication interface, and the memory communicate with each other through the communication bus;
the memory is configured to store a computer program; and the processor is configured to, when executing the computer program stored in the memory, implement steps of the pairing method according to any of claims 1 to 8.
